# EUROPÄISCHE PATENTSCHRIFT

(11) **EP 1 423 295 B1**
(45) Veröffentlichungstag und Bekanntmachung des Hinweises auf die Patenterteilung: **02.11.2005**
(21) Anmeldenummer: 02769934.7
(22) Anmeldetag: 04.09.2002
(51) Int. Cl.: B60N 2/66

(54) **RÜCKENLEHNE**
BACKREST
DOSSIER

(30) Priorität: 07.09.2001 DE 10145207
(43) Veröffentlichungstag der Anmeldung: 02.06.2004
(73) Patentinhaber: Brose Fahrzeugteile GmbH & Co. KG, Coburg, 96450 Coburg (DE)
(72) Erfinder: FORKEL, Michael, 96450 Coburg (DE)
(74) Vertreter: Baumgärtel, Gunnar
(86) Internationale Anmeldenummer: PCT/DE2002/003328
(87) Internationale Veröffentlichungsnummer: WO 2003/022625

(56) Entgegenhaltungen:
- WO-A-01/98105
- US-A- 4 354 709
- US-A- 4 909 568

## Beschreibung

Die Erfindung betrifft eine Rückenlehne für einen Kraftfahrzeugsitz nach dem Oberbegriff des Patentanspruchs 1, die zum Beispiel aus US-A-4 354 709 oder US-A-4 909 568 bekannt ist.

Eine derartige Rückenlehne umfaßt ein Lehnengestell; ein wölbbares Element, das sich flächig am Lehnengestell erstreckt und das mit seinem (in Lehnenlängsrichtung, d.h. in Erstreckungsrichtung der Wirbelsäule einer auf den Sitz sitzenden Person, betrachtet) oberen und unteren Endabschnitt jeweils am Lehnengestell oder an einem am Lehnengestell angeordneten Bauelement festgelegt ist; sowie eine Verstelleinrichtung, mit der die Wölbung des wölbbaren Elementes in einem Bereich zwischen den beiden genannten Endabschnitten (im Folgenden als mittlerer Bereich bezeichnet) einstellbar ist.

Bei einem solchen Fahrzeugsitz besteht das Problem, dass bei zunehmender Wölbung des wölbbaren Elementes dessen Krümmung im mittleren Bereich sehr groß wird, was einer gewünschten großflächigen Anlage des wölbbaren Elementes am Sitzpolster und der hiermit verbundenen großflächigen Abstützung des Rückenbereiches eines Fahrzeuginsassen entgegensteht.

Der Erfindung liegt das Problem zugrunde, eine Rückenlehne der eingangs genannten Art zu schaffen, die sich über einen großen Einstellbereich des wölbbaren Elementes durch eine großflächige Abstützung der Rückenpartie einer auf dem Sitz befindlichen Person auszeichnet.

Dieses Problem wird erfindungsgemäß durch die Schaffung einer Rückenlehne mit den Merkmalen des Patentanspruchs 1 gelöst.

Danach ist am Lehnengestell mindestens ein Begrenzungselement vorgesehen, das mit einem Ende mit dem mittleren Bereich des wölbbaren Elementes verbunden ist, um das Ausmaß der Wölbung des wölbbaren Elementes zu begrenzen.

Das Ausmaß der Wölbung, das dabei im jeweiligen Einzelfall (d.h. bei einer bestimmten Rückenlehne) zugelassen werden soll, wird durch die Wahl eines geeigneten Begrenzungselementes festgelegt.

Dadurch, dass das (vorzugsweise längserstreckt ausgebildete) Begrenzungselement mit einem Ende am Sitzgestell bzw. einer hieran angeordneten Baugruppe und mit dem anderen Ende am mittleren Bereich des wölbbaren Elementes festgelegt ist, begrenzt die maximale Ausdehnung des Begrenzungselementes quer zur Erstreckungsebene des Lehnengestells die maximale Wölbung des wölbbaren Elementes. Denn eine Zunahme der Wölbung ist gleichbedeutend mit einer zunehmenden Entfernung einzelner Punkte des wölbbaren Elementes von dem Lehnengestell. Indem die maximal mögliche Entfernung des mittleren Bereiches des wölbbaren Elementes von dem Lehnengestell durch ein Begrenzungselement auf einen maximalen Wert begrenzt wird, wird somit zugleich auch eine maximal mögliche Wölbung festgelegt.

Unter dem mittleren Bereich des wölbbaren Elementes wird dabei der gesamte Bereich verstanden, der sich zwischen dem oberen und unteren Endabschnitt des wölbbaren Elementes (in Lehnenlängsrichtung betrachtet) erstreckt. Der mittlere Bereich umfaßt daher ausdrücklich nicht nur einen den Mittelpunkt des wölbbaren Elementes umschließenden Bereich, sondern vielmehr jeden beliebigen Bereich, der sich zwischen dem oberen und unteren Endabschnitt des wölbbaren Elementes und damit zwischen den oberen und unteren Befestigungspunkten des wölbbaren Elementes erstreckt und von diesen beabstandet ist. Jedoch ist es durchaus vorteilhaft, wenn sich der mittlere Bereich um den Mittelpunkt des wölbbaren Elementes herum erstreckt.

Das Begrenzungselement wird vorzugsweise durch ein Straff-element gebildet, z. B. in Form eines Seiles, eines Gurtes oder eines Drahtes, das bei zunehmender Wölbung des mittleren Bereiches des wölbbaren Elementes gestrafft wird und schließlich bei hinreichender Straffung keine zusätzliche Wölbung mehr zuläßt.

Weiterhin kann das Begrenzungselement auch durch ein elastisch verformbares Zugmittel, z. B. in Form eines elastisch verformbaren Kuststoffstabes, gebildet werden.

Je nach dem, welche Wölbungseinstellung bei einem bestimmten Lehnentyp gewünscht ist, können auch mehrere Begren-zungselemente der genannten Art vorgesehen sein, die sowohl in Lehnenlängsrichtung als auch quer zur Lehnenlängsrichtung nebeneinander angeordnet sein können.

Die erfindungsgemäße Lösung ist unabhängig davon anwendbar, was für eine Verstelleinrichtung zur Einstellung der Wölbung des wölbbaren Elementes verwendet wird. Es kann sich hierbei beispielsweise um eine Verstelleinrichtung handeln, bei der ein Spannelement auf das wölbbare Element einwirkt oder andererseits um eine Verstelleinrichtung, bei der ein Kurvenkörper, z. B. in Form einer Exzenterscheibe, als Verstellelement dient.

Wenn als Verstellelement ein Spannelement, z. B. in Form eines Seiles oder eines Drahtes verwendet wird, dann kann das Begrenzungselement mit seinem dem wölbbaren Element abgewandten Ende an dem Verstellelement festgelegt werden. In diesem Fall bilden das Verstellelement zur Einstellung der Wölbung sowie das Begrenzungselement zur Begrenzung der Wölbung des wölbbaren Elementes eine einheitliche Baugruppe, die gegebenenfalls komplett vormontiert angeliefert werden kann.

Die erfindungsgemäße Lösung ist ferner unabhängig davon, ob zwischen dem Lehnengestell und dem Lehnenpolster eines Kraftfahrzeugsitzes nur ein einzelnes wölbbares Element angeordnet ist, auf das einerseits eine Verstelleinrichtung zur Einstellung der Wölbung einwirkt und das andererseits an dem Lehnenpolster anliegt, oder ob zwischen dem Lehnengestell und dem Lehnenpolster zwei oder mehr großflächige Elemente angeordnet sind, die zur Einstellung der Wölbung der Rückenlehne zusammenwirken. Das erfindungsgemäß vorgesehene Begrenzungselement kann bei einem beliebigen wölbbaren Element zur Anwendung kommen, das zur Festlegung der Wölbung der Rückenlehne eines Fahrzeugsitzes dient.

Weitere Merkmale und Vorteile der Erfindung werden bei der nachfolgenden Beschreibung eines Ausführungsbeispiels anhand der Figuren deutlich werden.

Es zeigen:
- Figur 1a -: eine Draufsicht auf ein wölbbares Element für die Rückenlehne eines Kraftfahrzeugsitzes;
- Figur 1b -: einen Schnitt durch das wölbbare Element gemäß Figur 1a in einem ungewölbten Zustand;
- Figur 2 -: einen Schnitt durch das wölbbare Element gemäß Figur 1a in einen stark gewölbten Zustand.

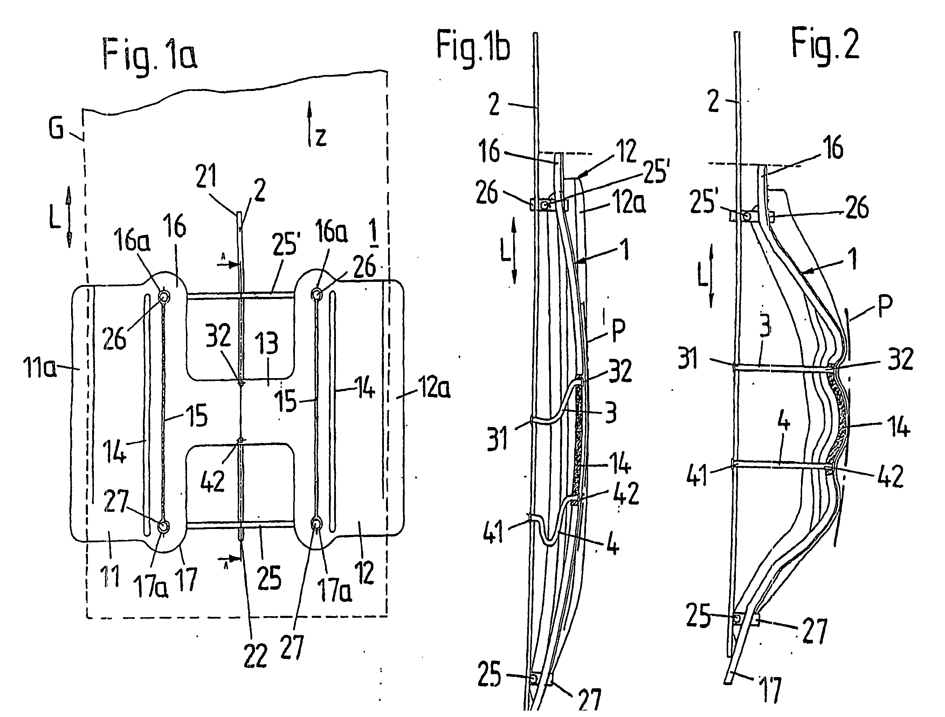

In den Figuren 1a und 1b ist ein großflächiges wölbbares Element 1 dargestellt, das an einem in Figur 1a lediglich schematisch angedeuteten Lehnengestell eines Kraftfahrzeugsitzes in einem Bereich angeordnet wird, der als Lordosenstütze für einen Kraftfahrzeuginsassen dient.

Der Grundkörper des wölbbaren Elementes 1 ist im Wesentlichen H-förmig ausgebildet mit zwei in Lehnenlängsrichtung L erstreckten seitlichen Abschnitten 11, 12, die über eine Quertraverse 13 miteinander verbunden sind. Die seitlichen Abschnitte 11, 12 des wölbbaren Elementes 1 weisen jeweils umgelegte seitliche Enden 11a, 12a sowie eine Versteifungsrippe 14 auf und sind hierdurch steifer ausgebildet als die leichter wölbbare Quertraverse 13. Die seitlichen Abschnitte 11, 12 des wölbbaren Elementes 1 sind dabei von der Quertraverse 13 jeweils durch einen sich in Lehnenlängsrichtung L erstreckenden Schlitz 15 teilweise entkoppelt.

Die Lehnenlängsrichtung L entspricht bei senkrecht aufgestellter Rückenlehne (entsprechend der Darstellung in Figur 1b) der vertikalen Fahrzeugachse (z-Achse), die sich vom Fahrzeugboden zum Fahrzeugdach erstreckt.

Zur Einstellung der Wölbung des wölbbaren Elementes 1 und damit eines vor dem wölbbaren Element 1 angeordneten, in Figur 1b schematisch dargestellten Lehnenpoisters P ist ein Spannelement 2 in Form eines Zugmittels aus Draht vorgesehen, das an der Rückenlehne, insbesondere am Lehnengestell, angeordnet ist. Das Spannelement 2 ist im Bereich seines unteren Endes 22 über ein Querverbindungselement 25 und hiermit verbundene Befestigungselemente 27 an entsprechenden Befestigungsstellen 17a am unteren Endabschnitt 17 des wölbbaren Elementes 1 festgelegt. (Die Befestigung des Spannelementes 2 im Bereich seines unteren Endes 22 an dem Querverbindungselement 25 ist in den Figuren 1b und 2 schematisch durch einen geschwärzten Befestigungspunkt angedeutet.)

Im Bereich seines oberen Endabschnittes 16 ist das wölbbare Element 1 demgegenüber im Bereich oberer Befestigungsstellen 16a mittels geeigneter Befestigungselemente 26, die über ein Querverbindungselement 25' miteinander verbunden sind, am Lehnenrahmen (in den Figuren nicht dargestellt) des Fahrzeugsitzes befestigt. Im Unterschied zu dem unteren Querverbindungselement 25 ist demnach das obere Querverbindungselement nicht mit dem Spannelement 2 verbunden.

Zusammenfassend ist also der obere Endabschnitt 16 des wölbbaren Elementes 1 über Befestigungsstellen 16a und über (mittels eines oberen Querverbindungselementes 25' miteinander verbundene) Befestigungselemente 26 unmittelbar am Lehnengestell festgelegt, während der untere Endabschnitt 17 des wölbbaren Elementes 1 über Befestigungsstellen 17a, Befestigungselemente 27 und ein unteres Querverbindungselement 25 am Spannelement 22 festgelegt ist.

Zur Einstellung der Wölbung des wölbbaren Elementes 1 wird mittels einer manuellen oder einer elektrischen Antriebseinheit eine Kraft auf das Spannelement 2 ausgeübt, so dass sich dessen unteres Ende 22 entlang der vertikalen Fahrzeugachse (z-Achse) in Lehnenlängsrichtung L nach oben bewegt. Hierdurch wird zugleich der untere Endabschnitt 17 des wölbbaren Elementes 1 mit angehoben, da dieser ja über Befestigungselemente 27 und das Querverbindungselement 25 am unteren Ende 22 des Spannelementes 1 festgelegt ist.

Der obere Endabschnitt 16 des wölbbaren Elementes 1 bleibt demgegenüber räumlich unverändert, da er über die zugeordneten Verbindungselemente 26 unmittelbar am Lehnengestell festgelegt ist.

Im Ergebnis wird durch Ausübung einer Kraft auf das Spann-element 2 in Richtung der vertikalen Fahrzeugachse z nach oben der untere Endabschnitt 17 des wölbbaren Elementes 1 in Richtung auf dessen oberen Endabschnitt 16 nach oben bewegt. Hierdurch nähern sich die beiden Endabschnitte 16, 17 einander an und das wölbbare Element 1 wird zunehmend gewölbt, vergleiche den Übergang des wölbbaren Elementes 1 vom ungewölbten Zustand (Figur 1b) in den gewölbten Zustand (Figur 2).

Grundsätzlich führt die Zunahme der Wölbung auch zu einer Zunahme der Krümmung des wölbbaren Elementes 1, was bei sehr starker Wölbung der gewünschten möglichst großflächigen Abstützung der Rückenpartie eines Fahrzeuginsassen über das wölbbare Element entgegensteht.

Vorliegend werden jedoch die Wölbung und damit insbesondere auch die Krümmung des wölbbare elementes 1 in seinem mittleren Bereich zwischen den beiden Endabschnitten 16, 17 durch zwei Begrenzungselemente 3, 4 (Niederhalter) begrenzt, die jeweils mit einem Ende 31 bzw. 41 am Spannelement 2 und mit dem anderen Ende 32 bzw. 42 an der Quertraverse 13 des wölbbaren Elementes 1 festgelegt sind. Die beiden längserstreckten Begrenzungselemente 3, 4 sind dabei in Lehnenlängsrichtung L voneinander beabstandet am oberen bzw. unteren Ende der Quertraverse 13 angeordnet.

in den in Figur 1b dargestellten ungewölbten Zustand des wölbbaren Elementes 1 sind die aus Kunststoff bestehenden Begrenzungselemente 3, 4 jeweils deformiert, so dass sie trotz ihrer länglichen Ausbildung zwischen dem Spannelement 2 und der Quertraverse 13 Platz finden.

Bei zunehmender Wölbung des wölbbaren Elementes 1 werden die Begrenzungselemente 3, 4 geradlinig ausgerichtet, vergleiche Figur 2. Durch die Länge der Begrenzungselemente 3, 4 bei geradliniger Ausrichtung ist der maximale Abstand definiert, den die Quertraverse 14 von dem Spannelement 2 (und damit vom Lehnengestell insgesamt) quer zur Lehnenlängsrichtung L einnehmen kann. Hierdurch wird die Wölbung des wölbbaren Elementes 1 begrenzt, die ja mit wachsendem Abstand des mittleren Bereiches des wölbbaren Elementes 1 von dem Spannelement 2 zunimmt. Es ist deutlich erkennbar, dass das wölbbare Element 1 auch in dem in Figur 2 dargestellten Zustand maximaler Wölbung großflächig an dem Lehnenpolster P anliegt und damit eine großflächige Abstützung der Rückenpartie eines Insassen ermöglicht.

Das wölbbare Element 1 muss dabei nicht unmittelbar am Rückenpolster P anliegen. Es ist durchaus möglich, zwischen dem wölbbaren Element 1 und dem Rückenpolster P noch eine zusätzliche Rückenschale anzuordnen.

Ferner kann die Erfindung mit beliebigen Mitteln zu Einstellung der Wölbung des wölbbaren Elementes 1 ausgeführt werden. Die hier beschriebene Verwendung von Spannmitteln 2 zur Einstellung der Wölbung des wölbbaren Elementes 1 ist daher nur beispielhaft angegeben. Bei Verwendung anderer Mittel zur Einstellung der Wölbung des wölbbaren Elementes 1 werden die dem wölbbaren Element 1 abgewandten Enden 31, 41 der längserstreckten Begrenzungselemente 3, 4 vorteilhaft am Sitzgestell (Lehnengestell) angebracht.

## Patentansprüche

1. Rückenlehne für einen Kraftfahrzeugsitz, mit
- einem Lehnengestell (G),
- einem wölbbaren Element (1), das sich flächig am Lehnengestell erstreckt und das mit seinem in Lehnenlängsrichtung oberen und unteren Endabschnitt jeweils an dem Lehnengestell oder an einem am Lehnengestell angeordneten Bauelement festgelegt ist, und
einer Verstelleinrichtung, mit der die Wölbung des wölbbaren Elementes in einem mittleren Bereich zwischen seinen beiden Endabschnitten einstellbar ist,
**dadurch gekennzeichnet,**
**dass** am Lehnengestell (G) mindestens ein Begrenzungselement (3, 4) vorgesehen ist, das mit einem Ende (32, 42) mit dem mittleren Bereich des wölbbaren Elementes (1) verbunden ist, um das Ausmaß der Wölbung des wölbbaren Elementes (1) zu begrenzen.

2. Rückenlehne nach Anspruch 1, **dadurch gekennzeichnet, dass** das Begrenzungselement (3, 4) längserstreckt ausgebildet ist.

3. Rückenlehne nach Anspruch 1 oder 2, **dadurch gekennzeichnet, dass** das Begrenzungselement (3, 4) bei zunehmender Wölbung des mittleren Bereiches gestrafft wird.

4. Rückenlehne nach einem der vorhergehenden Ansprüche, **dadurch gekennzeichnet, dass** das Begrenzungselement (3, 4) elastisch verformbar ist.

5. Rückenlehne nach einem der vorhergehenden Ansprüche, **dadurch gekennzeichnet, dass** das Begrenzungselement (3, 4) durch ein Zugmittel gebildet wird, das bei zunehmender Wölbung des wölbbaren Elementes (1) eine Zugkraft auf dessen mittleren Bereich ausübt.

6. Rückenlehne nach einem der vorhergehenden Ansprüche, **dadurch gekennzeichnet, dass** das Begrenzungselement (3, 4) durch ein elastisch verformbares Kunst-stoffelement, ein Seil, einen Gurt oder einen Draht gebildet wird.

7. Rückenlehne nach einem der vorhergehenden Ansprüche, **dadurch gekennzeichnet, dass** das Begrenzungselement (3, 4) mit dem anderen Ende (31, 41) an dem Lehnengestell (G) oder an einem am Lehnengestell (G) angeordneten Bauelement (2) festgelegt ist

8. Rückenlehne nach einem der vorhergehenden Ansprüche, **dadurch gekennzeichnet, dass** mehrere Begrenzungselemente (3, 4) vorgesehen sind.

9. Rückenlehne nach Anspruch 7, **dadurch gekennzeichnet, dass** die Begrenzungselemente (3, 4) in Lehnenlängsrichtung (L) hintereinander angeordnet sind.

10. Rückenlehne nach einem der vorhergehenden Ansprüche, **dadurch gekennzeichnet, dass** die Verstelleinrichtung als Verstellelement (2), das auf das wölbbare Element (1) einwirkt ein Spannelement oder einen Kurvenkörper aufweist.

11. Rückenlehne nach einem der vorhergehenden Ansprüche, **dadurch gekennzeichnet, dass** das Begrenzungsele-ment (3, 4) mit seinem anderen Ende (31, 41) an einem Verstellelement (2) der Verstelleinrichtung festgelegt ist, das auf das wölbbare Element (1) einwirkt.

12. Rückenlehne nach einem der vorhergehenden Ansprüche, **dadurch gekennzeichnet, dass** sich zwischen dem wölbbaren Element (1) und einem vor dem wölbbaren Element (1) angeordneten Lehnenpolster (P) ein Stützelement großflächig erstreckt.

## Claims

1. Backrest for a vehicle seat with
- a backrest frame (G)
- an curvature forming element (1) which extends with a flat area against the backrest frame and which is fixed on the backrest frame or on a structural element mounted on the backrest frame by an upper and lower end section in the longitudinal direction of the backrest, and
an adjusting device with which the bowing of the curvature forming element can be adjusted in a middle region between its two end sections,
**characterised in that**
on the backrest frame (G) there is at least one limiting element (3, 4) which is connected by one end (32, 42) to the middle region of the curvature forming element (1) in order to limit the extent of curvature of the curvature forming element (1).

2. Backrest according to claim 1, **characterised in that** the limiting element (3, 4) is elongated.

3. Backrest according to claim 1 or 2, **characterised in that** the limiting element (3, 4) is tautened as the bowing of the middle region increases.

4. Backrest according to one of the preceding claims, **characterised in that** the limiting element (3, 4) is elastically deformable.

5. Backrest according to one of the preceding claims, **characterised in that** the limiting element (3, 4) is formed by traction means which as the bowing of the curvature forming element (1) increases exerts a tensile force on its middle region.

6. Backrest according to one of the preceding claims, **characterised in that** the limiting element (3, 4) is formed by an elastically deformable plastics element, cable, belt or wire.

7. Backrest according to one of the preceding claims, **characterised in that** the limiting element (3, 4) is fixed with the other end (31, 41) on the backrest frame (G) or on a structural element (2) mounted on the backrest frame (G).

8. Backrest according to one of the preceding claims, **characterised in that** several limiting elements (3, 4) are provided.

9. Backrest according to claim 7, **characterised in that** the limiting element s(3, 4) are mounted one behind the other in the longitudinal direction (L) of the backrest.

10. Backrest according to one of the preceding claims, **characterised in that** the adjusting device has as adjusting element (2) which acts on the curvature forming element (1) a tensioning element or a curved body.

11. Backrest according to one of the preceding claims, **characterised in that** the limiting element (3, 4) is fixed with its other end (31, 41) on an adjusting element (2) of the adjusting device which acts on the curvature forming element (1).

12. Backrest according to one of the preceding claims, **characterised in that** between the curvature forming element (1) and a backrest cushion (P) mounted in front of the curvature forming element (1) there is a support element which extends over a large surface area.

## Revendications

1. Dossier pour un siège de véhicule, comportant
- un châssis de dossier (G),
- un élément pouvant former une voussure (1) qui s'étend à plat sur le châssis de dossier et qui, par sa section d'extrémité supérieure et inférieure dans la direction longitudinale de dossier, est respectivement fixé sur le châssis de dossier ou sur un élément disposé sur le châssis de dossier, et
- un dispositif de réglage avec lequel il est possible d'ajuster le cintrage de l'élément pouvant former une voussure dans une zone médiane entre ces deux sections d'extrémité,
**caractérisé en ce que**
sur le châssis de dossier (G), est prévu au moins un élément de délimitation (3, 4) qui est raccordé par une extrémité (32, 42) avec la zone médiane de l'élément pouvant former une voussure(1) pour délimiter le degré de cintrage de l'élément pouvant former une voussure (1).

2. Dossier selon la revendication 1, **caractérisé en ce que** l'élément de délimitation (3, 4) est formé de façon à s'étendre dans la direction longitudinale.

3. Dossier selon la revendication 1 ou 2, **caractérisé en ce que** l'élément de délimitation (3, 4) est tendu lors du cintrage croissant de la zone médiane.

4. Dossier selon l'une des revendications précédentes, **caractérisé en ce que** l'élément de délimitation (3, 4) est déformable élastiquement.

5. Dossier selon l'une des revendications précédentes, **caractérisé en ce que** l'élément de délimitation (3, 4) est formé par un élément de traction qui, pour un cintrage croissant de l'élément pouvant former une voussure (1), exerce une force de traction sur la zone médiane de ce dernier.

6. Dossier selon l'une des revendications précédentes, **caractérisé en ce que** l'élément de délimitation (3, 4) est formé par un élément en matière synthétique déformable élastiquement, un câble, une sangle ou un fil métallique.

7. Dossier selon l'une des revendications précédentes, **caractérisé en ce que** l'élément de délimitation (3, 4) est fixé par l'autre extrémité (31, 41) sur le châssis de dossier (G) ou sur un élément de construction (2) disposé sur le châssis de dossier (G).

8. Dossier selon l'une des revendications précédentes, **caractérisé en ce qu'**il est prévu plusieurs éléments de délimitation (3, 4).

9. Dossier selon la revendication 7, **caractérisé en ce que** les éléments de délimitation (3, 4) sont disposés successivement dans la direction longitudinale de dossier (L).

10. Dossier selon l'une des revendications précédentes, **caractérisé en ce** le dispositif de réglage présente, en tant qu'élément de réglage (2) qui agit sur l'élément pouvant former une voussure (1), un élément de tension ou un corps courbe.

11. Dossier selon l'une des revendications précédentes, **caractérisé en ce** l'élément de délimitation (3, 4) est fixé par son autre extrémité (31, 41) à un élément de réglage (2) du dispositif de réglage qui agit sur l'élément pouvant former une voussure (1).

12. Dossier selon l'une des revendications précédentes, **caractérisé en ce qu'**entre l'élément pouvant former une voussure (1) et un coussin de dossier (P) disposé devant l'élément pouvant former une voussure (1), s'étend un élément d'appui de grande surface.
